# EUROPÄISCHE PATENTSCHRIFT

(11) **EP 1 103 416 B1**
(45) Veröffentlichungstag und Bekanntmachung des Hinweises auf die Patenterteilung: **25.01.2006**
(21) Anmeldenummer: 00120493.2
(22) Anmeldetag: 20.09.2000
(51) Int. Cl.: B60N 3/10

(54) **Halter für einen Getränkebehälter in einem Kraftwagen**
Holder for beverage containers in a motor vehicle
Support pour récipients de boisson dans un véhicule

(30) Priorität: 25.11.1999 DE 19956649
(43) Veröffentlichungstag der Anmeldung: 30.05.2001
(73) Patentinhaber: fischerwerke Artur Fischer GmbH & Co. KG, 72178 Waldachtal (DE); DaimlerChrysler AG, 70567 Stuttgart (DE)
(72) Erfinder: Dieringer, Jürgen, 72178 Salzstetten (DE); Dettling, Roland, 72160 Horb-Untertalheim (DE); Plocher, Bernd, 72108 Rottenburg-Seebronn (DE); Volkmann, Tilo, 71069 Sindelfingen (DE); Kelz, Michael, 71134 Aidlingen (DE)

(56) Entgegenhaltungen:
- EP-A- 0 747 260
- EP-A- 0 838 365
- EP-A- 0 956 995
- DE-C- 4 429 515
- DE-U- 29 815 164
- US-A- 4 943 111

## Beschreibung

Die Erfindung betrifft einen Halter für einen Getränkebehälter in einem Kraftwagen mit den Merkmalen des Oberbegriffs des Anspruchs 1.

Ein derartiger Halter ist bekannt aus der EP-A-0956 995 (DE-A-198213131). Der bekannte Halter weist eine Getränkebehälteraufnahme mit einer Einstellöffnung zum Einstellen eines Getränkebehälters wie beispielsweise einer Tasse, eines Bechers oder einer Getränkedose auf. Die Getränkebehälteraufnahme ist an einem Schlitten angebracht, der vertikal aus einer abgesenkten in eine angehobene Stellung geführt ist. Anstelle der Schiebeführung kann beispielsweise auch eine Scherenführung oder dgl. vorgesehen werden. Beim bekannten Halter ist die Getränkebehälteraufnahme mittels eines Schwenkgelenks aus einer Nichtgebrauchsstellung in eine Gebrauchsstellung, in der der Getränkebehälter in die Getränkebehälteraufnahme einstellbar ist, schwenkbar am Schlitten angebracht. Beim bekannten Halter ist der Schwenkwinkel der Getränkebehälteraufnahme aus der Nichtgebrauchsstellung in die Gebrauchsstellung 90°. Es sind auch andere Schwenkwinkel von beispielsweise 180° möglich.

Der Erfindung liegt die Aufgabe zugrunde, einen Halter der vorstehenden Art in der Gebrauchsstellung der Getränkebehälteraufnahme stabil auszubilden.

Diese Aufgabe wird erfindungsgemäß durch die Merkmale des Anspruchs 1 gelöst. Der erfindungsgemäße Halter weist eine bewegliche Stütze auf, die die Getränkebehälteraufnahme in der angehobenen und Gebrauchsstellung abstützt. Dadurch wird insbesondere das ansonsten hochbelastete Schwenkgelenk entlastet. Die Stütze kann beispielsweise federbeaufschlagt sein, so dass sie sich selbsttätig in die Stützstellung bewegt.

Die Bewegung der Stütze in die Stützstellung kann auch vom Anheben und/oder Schwenken der Getränkebehälteraufnahme abgeleitet werden. Die Rückstellung der Stütze kann von der Schwenkbewegung der Getränkebehälteraufnahme in die Nichtgebrauchsstellung abgeleitet werden. Sofern die Bewegung der Stütze in die Stützstellung vom Anheben oder Schwenken der Getränkebehälteraufnahme abgeleitet wird, kann die Rückstellung der Stütze auch durch Federkraft erfolgen.

Die Stütze des erfindungsgemäßen Halters bildet zugleich eine Sperre, die die Führung der Getränkebehälteraufnahme in der angehobenen Stellung sperrt und dadurch ein unbeabsichtigtes Absenken der Getränkebehälteraufnahme verhindert. Durch die Rückbewegung der Stütze beim Schwenken der Getränkebehälteraufnahme in die Nichtgebrauchsstellung wird ihre Sperrwirkung aufgehoben und die Getränkebehälteraufnahme läßt sich absenken.

Bei einer Ausgestaltung der Erfindung weist die Stütze ein Schwenkgelenk auf, um sie in gewünschter Weise beweglich am Halter anzubringen.

Bei einer Ausgestaltung der Erfindung ist die Getränkebehälteraufnahme zwei- oder auch mehrteilig ausgebildet. Sie weist ein bewegliches Teil auf, das beispielsweise verschiebbar oder schwenkbar an einem anderen Teil der Getränkebehälteraufnahme angebracht und bei Nichtgebrauch in dieses, zumindest teilweise hineinbewegbar ist. Dadurch läßt sich bei Nichtgebrauch die Getränkebehälteraufnahme auf kleinerem Raum unterbringen. In der Gebrauchsstellung liegt das bewegliche Teil der Getränkebehälteraufnahme an einer Schwenksperre des Halters an, wodurch sich die Getränkebehälteraufnahme nicht aus der Gebrauchsstellung in die Nichtgebrauchsstellung schwenken läßt, wenn das bewegliche Teil der Getränkebehälteraufnahme aus deren anderem Teil herausbewegt ist. Da ein in die Getränkebehälteraufnahme eingestellter Getränkebehälter verhindert, dass das bewegliche Teil der Getränkebehälteraufnahme in deren anderes Teil hineinbewegt wird, verhindert diese Ausgestaltung der Erfindung ein Schwenken der Getränkebehälteraufnahme mit eingestelltem Getränkebehälter.

Bei einer Weiterbildung der Erfindung bewegt die Schwenksperre das bewegliche Teil der Getränkebehälteraufnahme beim Schwenken der Getränkebehälteraufnahme aus der Gebrauchsstellung in die Nichtgebrauchsstellung in das andere Teil der Getränkebehälteraufnahme hinein. Da das bewegliche Teil der Getränkebehälteraufnahme bei eingestelltem Getränkebehälter zusammen mit der Schwenksperre ein Schwenken der Getränkebehälteraufnahme verhindert, muß vor dem Schwenken der Getränkebehälteraufnahme ein eingestellter Getränkebehälter entnommen werden.

Bei einer Ausgestaltung der Erfindung weist der Halter eine Verriegelungseinrichtung auf, der die Getränkebehälteraufnahme in der abgesenkten Stellung und während des Anhebens in der Nichtgebrauchsstellung verriegelt hält. Die Verriegelungseinrichtung wird am Ende des Anhebens der Getränkebehälteraufnahme entriegelt. Bei dieser Ausgestaltung der Erfindung wird ein Schwenken der Getränkebehälteraufnahme während des Anhebens verhindert. Dies hat den Vorteil, dass ein Schräg- oder Querstellen der Getränkebehälteraufnahme und dadurch ein Verklemmen oder Verhaken mit umliegenden Teilen beim Anheben der Getränkebehälteraufnahme vermieden wird. Die Verriegelungseinrichtung legt einen zeitlichen Ablauf des vorhergehenden Anhebens und des nachfolgenden Schwenkens der Getränkebehälteraufnahme in die Gebrauchsstellung fest.

Bei einer Ausgestaltung der Erfindung weist der Halter ein Gehäuse auf, an welchem die Getränkebehälteraufnahme anhebbar geführt ist. Das Gehäuse weist eine Öffnung für die Getränkebehälteraufnahme in ihrer abgesenkten und Nichtgebrauchsstellung auf. Bei angehobener und in die Gebrauchsstellung geschwenkter Getränkebehälteraufnahme wird die Öffnung des Gehäuses von einer Abdeckung, insbesondere von einer schwenkbar am Gehäuse angebrachten Abdeckklappe abgedeckt, um die Öffnung zu verschließen. Die Abdeckung wird durch das Schwenken der Getränkebehälteraufnahme in die Nichtgebrauchsstellung und/oder das Absenken der Getränkebehälteraufnahme geöffnet. Das Öffnen der Abdeckung wird also von der Bewegung der Getränkebehälteraufnahme abgeleitet, die Abdeckung muß nicht manuell geöffnet oder geschlossen werden.

Die Erfindung wird nachfolgend anhand eines in der Zeichnung dargestellten Ausführungsbeispiels näher erläutert. Es zeigen:
- Figur 1: einen erfindungsgemäßen Halter in einer Gebrauchsstellung in perspektivischer Darstellung;
- Figur 2: den Halter aus Figur 1 aus entgegengesetzter Blickrichtung;
- Figur 3: den Halter in einer Figur 1 entsprechenden Darstellung mit Ausbrüchen; und
- Figur 4: den Halter aus Figur 1 in einer abgesenkten Nichtgebrauchsstellung.

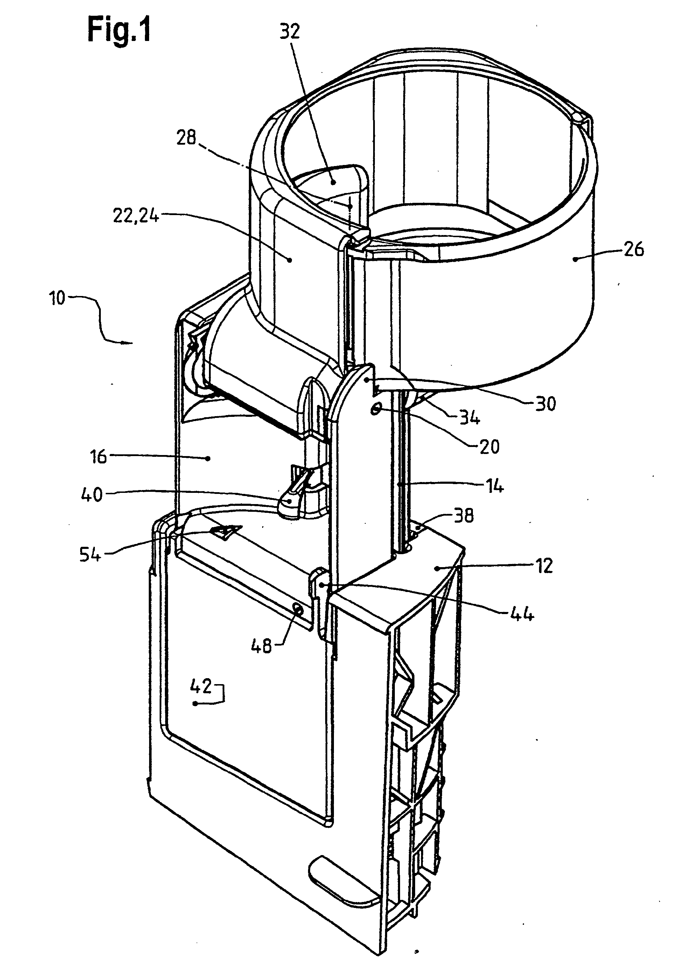

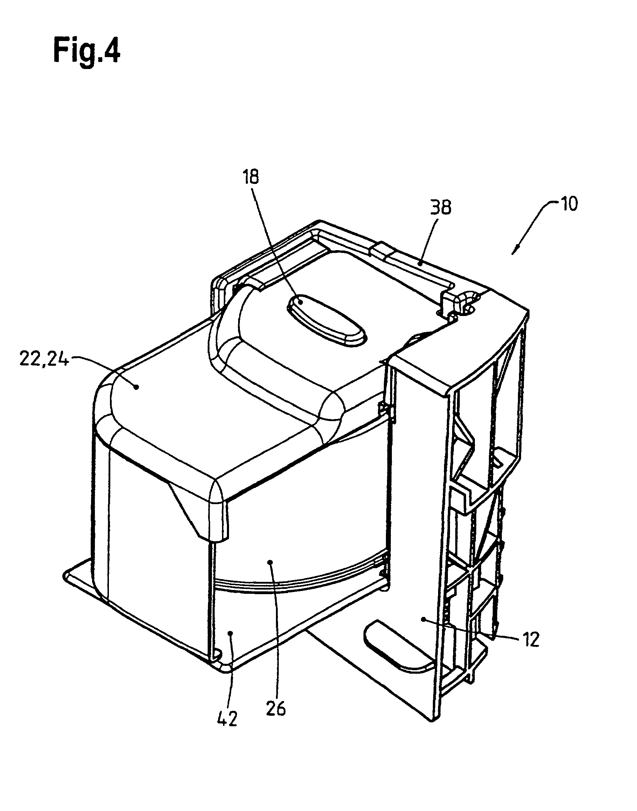

Der in der Zeichnung dargestellte, erfindungsgemäße Halter 10 dient zum Einstellen eines nicht dargestellten Getränkebehälters wie beispielsweise einer Tasse, einem Becher oder einer Getränkedose, er ist zur versenkten Anbringung in einem Kraftwagen beispielsweise in einer Mittelkonsole oder einer von oben zugänglichen Stelle in einer Türverkleidung vorgesehen. Der Halter 10 weist ein Gehäuse 12 auf, welches mit einer sich über eine Oberseite und eine Seitenfläche des Gehäuses 12 erstreckende Öffnung versehen ist. Im Gehäuse 12 ist mittels einer Nut- und Federführung 14 ein Schlitten 16 vertikal verschieblich aus einer abgesenkten (Figur 4) in eine angehobene Stellung (Figuren 1 bis 3) geführt. Der Schlitten 16 wird von einer in der Zeichnung nicht sichtbaren Rollfeder (Zugfeder) in die angehobene Stellung bewegt. In der abgesenkten Stellung wird der Schlitten 16 mit einer Verriegelungseinrichtung gehalten, die mit einer Taste 18 (Figur 4) entriegelbar ist. Derartige Federantriebe und Verriegelungseinrichtungen sind dem Fachmann an sich geläufig und es soll an dieser Stelle nicht näher darauf eingegangen werden, da sie nicht den eigentlichen Gegenstand der Erfindung bilden.

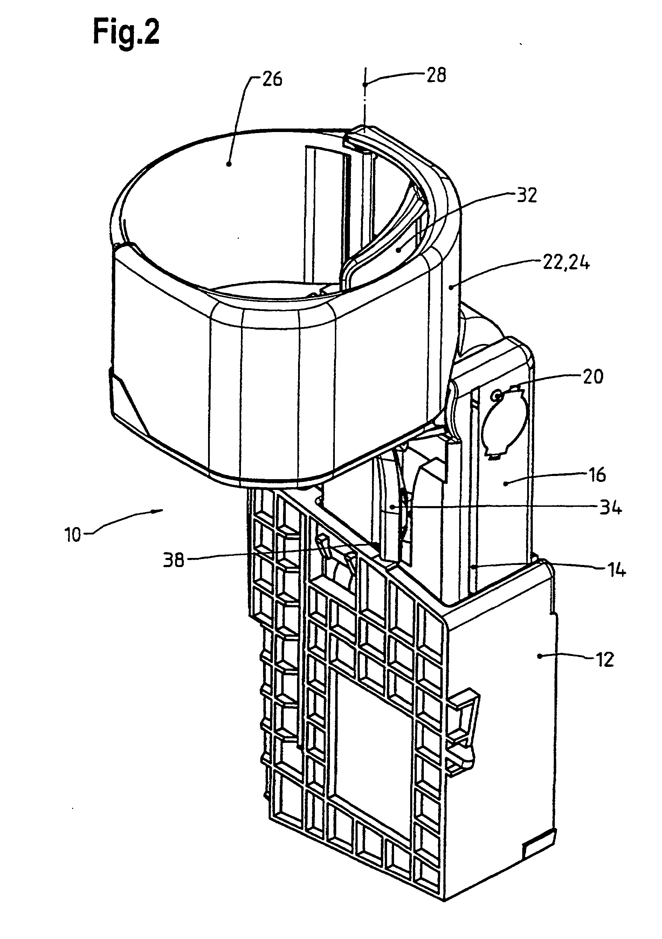

An einer Oberseite des Schlittens 16 ist mit einer Schwenkzapfenverbindung 20 eine Getränkebehälteraufnahme 22 um eine horizontale Achse schwenkbar angebracht. Die Getränkebehälteraufnahme 22 wird von einem in der Zeichnung ebenfalls nicht sichtbaren, dem Fachmann ebenfalls geläufigen Schwenkfederelement, beispielsweise einer Torsionsschraubenfeder, in die in Figuren 1 und 2 dargestellte Gebrauchsstellung geschwenkt. In der Gebrauchsstellung ist der nicht dargestellte Getränkebehälter in die Getränkebehälteraufnahme 22 einstellbar. Die Getränkebehälteraufnahme 22 hat näherungsweise die Form eines unrunden Rohres mit einem Boden zum Aufstellen des nicht dargestellten Getränkebehälters. Die Getränkebehälteraufnahme 22 ist zweistückig mit einem ersten Teil 24 und einem beweglichen Teil 26 ausgebildet. Das bewegliche Teil 26 ist mit einer Schwenkzapfenverbindung um eine zur Getränkebehälteraufnahme 22 achsparallele Schwenkachse 28 schwenkbar am ersten Teil 24 der Getränkebehälteraufnahme 22 angebracht. Das erste Teil 24 erstreckt sich in Umfangsrichtung um mehr als 180°, das bewegliche Teil 26 schließt die Getränkebehälteraufnahme 22 in Umfangsrichtung. Das bewegliche Teil 26 ist gegen die Kraft eines in der Zeichnung nicht sichtbaren Schwenkfederelements um die Schwenkachse 28 in das erste Teil 24 der Getränkebehälteraufnahme 22 hinein verschwenkbar, so dass sich eine Breite der Getränkebehälteraufnahme 22 bei Nichtgebrauch ve1rschmälern läßt. Die in das erste Teil 24 der Getränkebehälteraufnahme 22 hineinverschwenkte Stellung des beweglichen Teils 26 ist in Figur 4 dargestellt. In der in Figur 1 dargestellten Stellung liegt das bewegliche Teil 26 an einer Nase 30 des Schlittens 16 an. Die Nase 30 steht nach oben vom Schlitten 16 ab, sie bildet eine Schwenksperre 30 für die Getränkebehälteraufnahme 22. Da sich bei einem in die Getränkebehälteraufnahme 22 eingestellten Getränkebehälter das bewegliche Teil 26 nicht in das andere Teil 24 hineinschwenken läßt, verhindert das an der Schwenksperre 30 anliegende bewegliche Teil 26 ein Schwenken der Getränkebehälteraufnahme 22 um die Schwenkzapfenverbindung 20. Ist kein Getränkebehälter in die Getränkebehälteraufnahme 22 eingestellt, läßt sich die Getränkebehälteraufnahme 22 um 180° um die Schwenkzapfenverbindung 20 in die in Figur 4 dargestellte Nichtgebrauchsstellung schwenken. Bei diesem Schwenken drückt die die Schwenksperre 30 bildende Nase 30 des Schlittens 16 das bewegliche Teil 26 der Getränkebehälteraufnahme 22 in das andere Teil 24 der Getränkebehälteraufnahme 22 hinein.

In der Getränkebehälteraufnahme 22 ist eine an sich bekannte, schwenkbare und federbeaufschlagte Ausgleichsklappe 32 angebracht, die einen in die Getränkebehälteraufnahme 22 eingestellten Getränkebehälter gegen die Teile 24, 26 der Getränkebehälteraufnahme 22 drückt, um die Getränkebehälteraufnahme 22 an Getränkebehälter unterschiedlichen Durchmessers anzupassen.

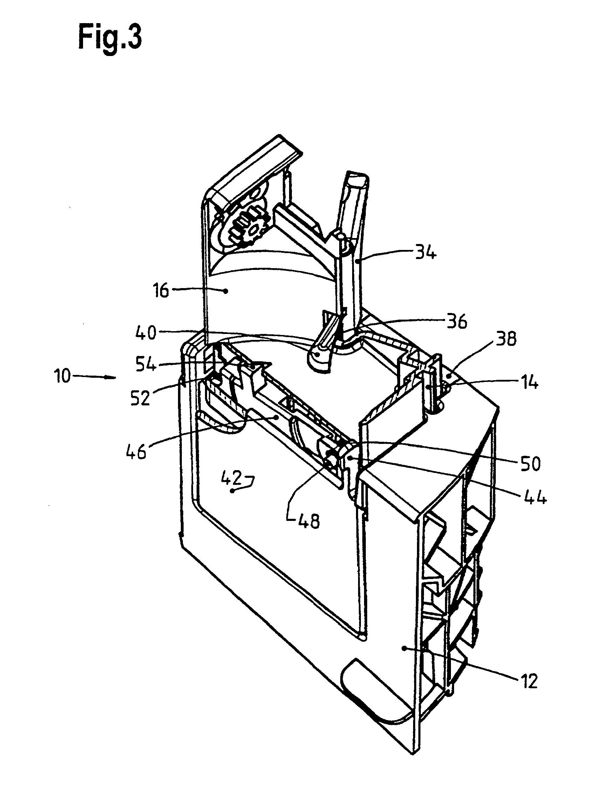

Unterhalb der Getränkebehälteraufnahme 22 ist eine Stütze 34 (Figuren 2 und 3) um eine vertikale Achse schwenkbar am Schlitten 16 angebracht. Eine Torsionsschraubenfeder 36 als Schwenkfederelement schwenkt die Stütze 34 in die in Figuren 1 bis 3 dargestellte Stützstellung, in der die Stütze 34 seitlich aus dem Schlitten 16 vorsteht und die Getränkebehälteraufnahme 22 auf der Stütze 34 aufliegt und von der Stütze 34 abgestützt wird. In der aus dem Schlitten 16 herausgeschwenkten Stützstellung übergreift die Stütze 34 mit einer Unterseite einen oberen Rand 38 des Gehäuses 12 des erfindungsgemäßen Halters 10. Auf diese Weise verhindert die Stütze 34 in der Stützstellung ein Verschieben (Absenken) des Schlittens 16 nach unten, die Stütze 34 bildet zugleich eine Sperre für den Schlitten 16. Wird die Getränkebehälteraufnahme 22 aus der in Figuren 1 und 2 dargestellten Gebrauchsstellung um 180° in die in Figur 4 dargestellte Nichtgebrauchsstellung geschwenkt, drückt die Getränkebehälteraufnahme 22 mit ihrer Außenseite gegen eine Nase 40 der Stütze 34, die durch den Schlitten 16 hindurchragt. Dabei verschwenkt die Getränkebehälteraufnahme 22 die Stütze 34 gegen die Kraft ihrer Schwenkfeder 36 in eine am Schlitten 16 anliegende Stellung, in der die Stütze 34 den oberen Rand 38 des Gehäuses 12 nicht übergreift, so dass der Schlitten 16 nach unten verschoben werden kann.

Ein seitlicher Bereich der Öffnung des Gehäuses 12 für die Getränkebehälteraufnahme 22 ist von einer Abdeckklappe 42 abgedeckt. Die Abdeckklappe 42 ist mittels einer Schwenkzapfenverbindung um eine horizontale Achse im Bereich ihres oberen Randes schwenkbar am Schlitten 16 angebracht. Von der Abdeckklappe 42 steht eine Nase 44 nach oben, die beim Schwenken der Getränkebehälteraufnahme 22 in die in Figur 4 dargestellte Nichtgebrauchsstellung zur Seite verschwenkt wird. Dadurch schwenkt die Abdeckklappe 42 in die in Figur 4 dargestellte horizontale Stellung in Anlage an die Getränkebehälteraufnahme 22.

Der Halter 10 weist eine Verriegelungseinrichtung auf, die die Getränkebehälteraufnahme 22 in der Nichtgebrauchsstellung gegen Schwenken sperrt, solange sich der Schlitten 16 nicht in seiner oberen Stellung befindet. Die Verriegelungseinrichtung weist einen Sperriegel 46 auf, der um Schwenkzapfen 48 schwenkbar am Schlitten 16 angebracht ist. Der Sperriegel 46 wird von einer Torsionsschraubenfeder 50 als Schwenkfeder nach oben gedrückt. In der oberen, in Figuren 1 bis 3 dargestellten Stellung des Schlittens 16 liegt eine Rückhaltenase 52 an einer Rippe des Gehäuses 12 an und den Sperriegel 46 gegen die Kraft seiner Schwenkfeder 50 nach unten drückt. Befindet sich der Schlitten 16 unterhalb seiner oberen Stellung, so drückt die Schwenkfeder 50 den Sperriegel 46 nach oben, wodurch ein an einer Oberseite des Sperriegels 46 angeordneter Sperrnocken 54 nach oben aus dem Schlitten 16 austritt. Der Sperrnocken 54 hintergreift einen Rand der Getränkebehälteraufnahme 22 in deren Nichtgebrauchsstellung, so dass diese nicht verschwenkt. Erreicht der Schlitten 16 seine obere Stellung, drückt die Rückhaltenase 52 den Sperriegel 46 nach unten, so dass der Sperrnocken 54 des Sperriegels 46 außer Eingriff von der Getränkebehälteraufnahme 22 gelangt und diese federbetätigt in ihre in Figuren 1 und 2 dargestellte Gebrauchsstellung schwenkt.

## Patentansprüche

1. Halter (10) für einen Getränkebehälter in einem Kraftwagen, mit einer Getränkebehälteraufnahme (22) zum Einstellen des Getränkebehälters, mit einer Führung (14), mit der die Getränkebehälteraufnahme (22) aus einer abgesenkten in eine angehobene Stellung und umgekehrt beweglich geführt ist, und mit einem Schwenkgelenk (20) mit dem die Getränkebehälteraufnahme (22) zwischen einer Nichtgebrauchsstellung und einer Gebrauchsstelung hin- und herschwenkbar ist, wobei in der GebrauchsStellung der Getränkebehälter in die Getränkebehälteraufnahme (22) einstellbar ist, **dadurch gekennzeichnet, dass** der Halter (10) eine bewegliche Stütze (34) für die Getränkebehälteraufnahme (22) aufweist, die beim Bewegen der Getränkebehälteraufnahme (22) in die angehobene Stellung und/oder beim Schwenken der Getränkebehälteraufnahme (22) in die Gebrauchsstellung in eine die Getränkebehälteraufnahme (22) stützende Stützstellung bewegt wird, und dass die Stütze (34) zugleich eine Sperre für die Führung (14) der Getränkebehälteraufnahme (22) bildet, die die Getränkebehälteraufnahme (22) in der Gebrauchsstellung gegen ein Absenken sperrt.

2. Halter nach Anpruch 1, **dadurch gekennzeichnet, dass** durch Schwenken der Getränkebehälteraufnahme (22) aus der Gebrauchsstellung in die Nichtgebrauchsstellung die Stütze (34) zur Seite bewegt und ihre Sperrwirkung aufgehoben wird.

3. Halter nach Anspruch 1, **dadurch gekennzeichnet, dass** die Stütze (34) ein Schwenkgelenk aufweist.

4. Halter nach Anspruch 1, **dadurch gekennzeichnet, dass** die Getränkebehälteraufnahme (22) zwei- oder mehrteilig ausgebildet ist, wobei ein bewegliches Teil (26) der Getränkebehälteraufnahme (22) zumindest teilweise in ein anderes Teil (24) der Getränkebehälteraufnahme (22) hinein bewegbar ist, und dass in der Gebrauchsstellung der Getränkebehälteraufnahme (22) das bewegliche Teil (26) der Getränkebehälteraufnahme (22) in einer aus dem anderen Teil (24) der Getränkebehälteraufnahme (22) herausbewegten Stellung an einer Schwenksperre (30) des Halters (10) anliegt, so dass die Getränkebehälteraufnahme (22) gegen Schwenken gesichert ist.

5. Halter nach Anspruch 4, **dadurch gekennzeichnet, dass** die Schwenksperre (30) das bewegliche Teil (26) der Getränkebehälteraufnahme (22) beim Schwenken der Getränkebehälteraufnahme (22) aus der Gebrauchsstellung in die Nichtgebrauchsstellung in das andere Teil (24) der Getränkebehälteraufnahme (22) hinein bewegt.

6. Halter nach Anspruch 1, **dadurch gekennzeichnet, dass** der Halter (10) eine Verriegelungseinrichtung (46, 48, 50, 52, 54) aufweist, die die Getränkebehälteraufnahme (22) in der Nichtgebrauchsstellung verriegelt und die durch Anheben der Getränkebehälteraufnahme (22) am Ende des Anhebens entriegelt wird.

7. Halter nach Anspruch 1, **dadurch gekennzeichnet, dass** der Halter (10) ein Gehäuse (12) mit einer Öffnung aufweist, in der die Getränkebehälteraufnahme (22) in der abgesenkten und Nichtgebrauchsstellung zumindest teilweise einliegt, und dass das Gehäuse (12) eine Abdeckung (42) aufweist, die bei angehobener, in die Gebrauchsstellung geschwenkter Getränkebehälteraufnahme (22) die Öffnung des Gehäuses (12) abdeckt und die durch Schwenken der Getränkebehälteraufnahme (22) in die Nichtgebrauchsstellung und/oder durch Absenken der Getränkebehälteraufnahme (22) geöffnet wird.

8. Halter nach Anspruch 7, **dadurch gekennzeichnet, dass** die Abdeckung (42) eine schwenkbar am Gehäuse (12) angebrachte Abdeckklappe (42) ist.

## Claims

1. Holder (10) for a drinks container in a motor vehicle, having a drinks container receiver (22) for insertion of the drinks container, having a guide device (14), by means of which the drinks container receiver (22) is so guided that it can be moved from a lowered position into a raised position and *vice-versa,* and having a pivot joint (20), by means of which the drinks container receiver (22) is arranged to be pivoted back and forth between a non-use position and a use position, the drinks container being insertable into the drinks container receiver (22) in the use position, **characterised in that** the holder (10) has a movable support (34) for the drinks container receiver (22), which is moved into a support position supporting the drinks container receiver (22) on movement of the drinks container receiver (22) into the raised position and/or on pivoting of the drinks container receiver (22) into the use position; and at the same time the support (34) forms a blocking mechanism for the guide device (14) of the drinks container receiver (22), which blocks lowering of the drinks container receiver (22) in the use position.

2. Holder according to claim 1, **characterised in that**, as a result of pivoting of the drinks container receiver (22) from the use position into the non-use position, the support (34) is moved to the side and its blocking action is cancelled.

3. Holder according to claim 1, **characterised in that** the support (34) has a pivot joint.

4. Holder according to claim 1, **characterised in that** the drinks container receiver (22) is made of two or more pieces, a movable piece (26) of the drinks container receiver (22) being arranged to be moved, at least partially, into another piece (24) of the drinks container receiver (22); and, in the use position of the drinks container receiver (22), the movable piece (26) of the drinks container receiver (22), in a position moved out from the other piece (24) of the drinks container receiver (22), abuts a pivot block (30) of the holder (10) so that the drinks container receiver (22) is secured against pivoting.

5. Holder according to claim 4, **characterised in that**, on pivoting of the drinks container receiver (22) from the use position into the non-use position, the pivot block (30) moves the movable piece (26) of the drinks container receiver (22) into the other piece (24) of the drinks container receiver (22).

6. Holder according to claim 1, **characterised in that** the holder (10) has a locking device (46, 48, 50, 52, 54), which locks the drinks container receiver (22) in the non-use position and is unlocked as a result of raising of the drinks container receiver (22) at the end of raising.

7. Holder according to claim 1, **characterised in that** the holder (10) has a housing (12) having an opening, in which the drinks container receiver (22) is located, at least partially, in the lowered and non-use position; and the housing (12) has a covering (42), which covers the opening in the housing (12) when the drinks container receiver (22) has been raised and pivoted into the use position and which is opened by pivoting of the drinks container receiver (22) into the non-use position and/or by lowering of the drinks container receiver (22).

8. Holder according to claim 7, **characterised in that** the covering (42) is a cover flap (42) pivotally mounted on the housing (12).

## Revendications

1. Support (10) pour un récipient de boisson dans un véhicule avec un logement pour récipient de boisson (22) pour l'ajustage du récipient de boisson, avec une glissière (14) avec laquelle le logement du récipient de boisson (22) peut être sorti d'une position abaissée et placé dans une position relevée et vice et versa et avec une articulation de basculement (20) avec laquelle le logement du récipient de boisson (22) peut être basculé d'avant en arrière entre une position d'utilisation et une position de non-utilisation, dans la position d'utilisation le récipient de boisson étant ajustable dans le logement de récipient de boisson (22), **caractérisé en ce que** le support (10) comporte un montant mobile (34) pour le logement du récipient de boisson (22) qui, lors du déplacement du logement du récipient de boisson (22) est mis en position relevée et/ou lors du basculement du logement du récipient de boisson (22) dans la position d'utilisation est mis dans une position de montant soutenant le logement du récipient de boisson (22) et **en ce que** le montant (34) forme en même temps un barrage pour la glissière (14) du logement du récipient de boisson (22) qui bloque le logement du récipient de boisson (22) dans la position d'utilisation pour l'empêcher de descendre.

2. Support selon la revendication 1, **caractérisé en ce que** le basculement du logement du récipient de boisson (22) déplace sur le côté le montant (34) hors de la position d'utilisation dans la position de non-utilisation et exerce son action de blocage.

3. Support selon la revendication 1, **caractérisé en ce que** le montant (34) comporte une articulation de basculement.

4. Support selon la revendication 1, **caractérisé en ce que** le logement du récipient de boisson (22) est configuré en deux parties ou davantage, une partie mobile (26) du logement du récipient de boisson (22) pouvant être déplacée au moins partiellement dans une autre partie (24) du logement du récipient de boisson (22) et dans la position d'utilisation du logement du récipient de boisson (22) la partie mobile (26) du logement du récipient de boisson (22) adhérant dans une autre position déplacée à partir de l'autre partie (24) du logement du récipient de boisson (22) à un blocage de basculement (30) du support (10) de manière à ce que le logement du récipient de boisson (22) soit protégé du basculement.

5. Support selon la revendication 4, **caractérisé en ce que** le blocage de basculement (30) déplace la partie mobile (26) du logement du récipient de boisson (22) en basculant le logement du récipient de boisson (22) hors de la position d'utilisation dans la position de non-utilisation dans l'autre partie (24) du logement du récipient de boisson (22).

6. Support selon la revendication 1, **caractérisé en ce que** le support (10) comporte un dispositif de verrouillage (46, 48, 50, 52, 54), qui verrouille le logement du récipient de boisson (22) dans la position de non-utilisation et qui est déverrouillée par le levage du logement du récipient de boisson (22) à la fin du levage.

7. Support selon la revendication 1, **caractérisé en ce que** le support (10) comporte un boîtier (12) avec une ouverture, dans laquelle le logement du récipient de boisson (22) se met au moins partiellement dans la position abaissée et de non-utilisation et **en ce que** le boîtier (12) comporte un couvercle (42) qui recouvre l'ouverture du boîtier (12) lorsque le logement du récipient de boisson levé est basculé dans la position d'utilisation et qui est ouvert par basculement du logement du récipient de boisson (22) dans la position de non-utilisation et/ou par abaissement du logement du récipient de boisson (22).

8. Support selon la revendication 7, **caractérisé en ce que** le couvercle (42) est un clapet de recouvrement (42) orientable installé dans le boîtier (12).
